# FASCICULE DE BREVET EUROPEEN

(11) **EP 0 569 295 B1**
(45) Date de publication et mention de la délivrance du brevet: **23.08.1995**
(21) Numéro de dépôt: 93401158.6
(22) Date de dépôt: 05.05.1993
(51) Int. Cl.: B60R 9/045

(54) **Porte-bagages pour véhicule automobile**
Gepäckträger für Kraftfahrzeuge
Luggage carrier for motor vehicles

(30) Priorité: 06.05.1992 FR 9205580
(43) Date de publication de la demande: 10.11.1993
(73) Titulaire: ETABLISSEMENTS FARNIER & PENIN, F-79302 Bressuire Cédex (FR)
(72) Inventeur: Jeuffray, Jean-Marie, F-79300 Bressuire (FR); Memeteau, Michel, F-79330 St-Varent (FR)
(74) Mandataire: Robert, Jean-Pierre

(56) Documents cités:
- WO-A-91/08929
- DE-A- 3 641 745
- DE-A- 3 814 799
- FR-A- 2 661 378

## Description

La présente invention concerne un porte-bagages de toit pour véhicule automobile tel que defini dans les préambules des revendications indépendantes 1 et 2 et déjà connu dans les documents DE-A-3 641 745 ou FR-A-2 661 378 et WO-A-91/08929 respectivement.

Certains véhicules, notamment les véhicules monocorps ou les véhicules du genre break, comportent des barres longitudinales disposées à demeure au-dessus du pavillon. Elles constituent les moyens de fixation latérale pour une charge posée à même le pavillon si ce dernier est autoporteur.

Ces barres constituent également une embase pour la mise en place de barres transversales lesquelles sont destinées au support d'une charge lorsque le pavillon n'est pas autoporteur.

Les barres transversales sont des accessoires qu'il faut retirer lorsqu'on n'en a plus l'usage. Ces barres sont en effet génératrices de bruit aérodynamique et sont un facteur d'augmentation de la résistance à la pénétration dans l'air donc de la consommation de carburant. Le retrait, sinon nécessaire du moins conseillé de ces barres transversales, est une contrainte pour l'utilisateur car il faut avoir prévu une structure pour les recevoir lorsqu'elles ne sont pas en service. Dans de nombreux cas, cette structure est constituée par la malle à bagages du véhicule ce qui constitue un obstacle à l'utilisation rationnelle de cette malle.

On connaît, notamment par le document DE-A-3 814 799, une solution qui consiste à prévoir dans les barres longitudinales, des logements pour les éléments de barres transversales. Cette solution est assez complexe et surtout conduit à un porte-bagages lourd. En outre, dans une option où les éléments de barres transversales sont à ajouter, cela demande à l'utilisateur un montage un peu compliqué mettant en oeuvre une articulation.

La présente invention propose une solution au rangement aisé des barres transversales d'un porte-bagages tenant au fait qu'une partie de chaque barre longitudinale, en étant déplacée, devient une barre transversale.

Dans ce but, l'invention propose une solution caractérisée comme dans la seconde partie de la revendication 1 et 2.

Plus précisément, l'invention a pour objet un dispositif de galerie de toit pour pavillon de véhicule automobile comportant au moins deux éléments longitudinaux attelés au pavillon du véhicule par deux pieds d'extrémité. Selon l'invention chaque élément longitudinal comporte au moins un pied supplémentaire entre les deux pieds d'extrémité, le divisant en au moins deux barres, au moins l'une de ces barres étant reliée aux pieds d'extrémité et supplémentaire par des moyens de liaison connectables et déconnectables permettant la mise en place de cette barre soit entre deux pieds d'un même élément longitudinal soit entre deux pieds de deux éléments longitudinaux distincts situés dans une même position longitudinale sur le pavillon du véhicule.

Dans une variante de réalisation le dispositif comporte deux pieds supplémentaires définissant une barre centrale dans chaque élément longitudinal de galerie et deux parties d'extrémité fixes, la barre centrale étant reliée aux parties d'extrémité de la même manière que la barre mobile ci-dessus.

Dans un premier mode de réalisation de l'invention, les moyens de liaison des différentes parties constitutives de la galerie comportent des organes d'emboîtement prévus en correspondance aux extrémités de la barre et dans les pieds associés à des organes de verrouillage des emboîtements réalisés dans les deux positions de la barre. Dans ce mode de réalisation, la barre est complètement déconnectée des deux parties d'extrémité avec lesquelles elle forme une barre longitudinale puis, grâce aux moyens de liaison, est connectée transversalement à ces pieds pour constituer une barre transversale.

Dans un second mode de réalisation, les moyens de liaison comportent au moins une articulation entre une extrémité de la partie centrale et un pied d'axe sensiblement perpendiculaire au pavillon du véhicule et des moyens d'emboîtement portés par l'autre extrémité de la barre et l'autre pied susceptibles de coopérer avec la barre dans chacune de ses positions. Dans ce cas, pour passer d'une galerie à deux barres longitudinales à une galerie à deux barres transversales, on déconnecte une des extrémités de chacune des barres mobiles pour la faire tourner d'environ 90° et la connecter au pied de l'autre barre longitudinale de laquelle on aura préalablement déconnecté la barre mobile correspondante.

Afin de permettre des ajustements de longueur, et prendre en compte notamment différents écartements pouvant exister entre deux barres longitudinales sur le toit d'un véhicule tout en ayant en fabrication une même série d'éléments, la barre mobile de chaque élément de galerie est avantageusement télescopique et notamment entre deux positions correspondant respectivement à sa longueur en tant que partie d'élément longitudinal de galerie et sa longueur en tant que barre transversale.

Dans la version articulée de la galerie selon l'invention, l'axe d'articulation est porté par l'un des pieds au moyen d'un palier présentant un certain degré de liberté, et notamment élastiquement déformable, pour qu'il soit possible au moment où on fait passer les barres de leur position longitudinale à leur position transversale, que ces barres se croisent et puissent être déviées d'un plan de rotation qui aurait été fixe si l'axe d'articulation avait été rigidement fixé dans la partie d'extrémité correspondante.

Afin d'assurer la sécurité des connexions dans chacune des deux positions de chaque barre mobile, les moyens d'emboîtement qui assurent ces connexions comportent un organe de verrouillage à actionnement manuel et normalement maintenu ou repoussé dans sa position de verrouillage par un organe élastique de rappel.

Pour éviter les bruits dûs aux vibrations et rattraper les jeux, il pourra être avantageux de prévoir que la barre mobile soit en deux portions coulissantes l'une par rapport à l'autre dans le sens longitudinal avec entre elles un organe élastique de rappel tendant à rendre sa longueur minimale et légèrement inférieure à celle séparant les parties fixes des moyens de liaison connectables et déconnectables de sorte que sur ces moyens il soit créé une tension par la barre. En particulier, dans le cas où la barre mobile est articulée, son extrémité portant l'articulation est en forme de tige de guidage sur laquelle est montée à coulissement la partie principale de cette barre, l'organe de rappel étant attelé entre elles pour rendre minimale la longueur de l'ensemble formé par cette tige et la partie principale de la barre.

L'invention ressortira de la description qui en est donnée ci-après et qui concerne les deux modes de réalisation énoncés ci-dessus.

Il sera fait référence aux dessins annexés dans lesquels :
- la figure 1 est une vue générale d'un pavillon équipé d'une galerie de toit conforme à l'invention,
- la figure 2 est une même vue de cette galerie conforme à l'invention comportant des barres transversales,
- les figures 3 et 4 sont des vues identiques aux figures 1 et 2 dans lesquelles une partie d'extrémité de chaque élément longitudinal est réduite à un pied.
- la figure 5 illustre un mode de réalisation des organes d'emboîtement portés par les parties d'extrémités fixes de la galerie selon l'invention,
- la figure 6 est une vue extérieure de la liaison d'une partie d'extrémité de galerie avec une partie centrale pour former un élément longitudinal,
- la figure 7 illustre les éléments d'emboîtement et de verrouillage portés par une extrémité de la partie centrale mobile de la galerie de toit selon l'invention prêts à coopérer avec les éléments d'emboîtement des parties fixes dans sa position de barre transversale.
- la figure 8 illustre dans une vue identique à celle de la figure 6, la liaison entre la partie centrale et les éléments fixes de la galerie, pour former une barre longitudinale,
- la figure 9 est une vue d'une liaison articulée de la partie centrale mobile à l'un des éléments fixes de la galerie.

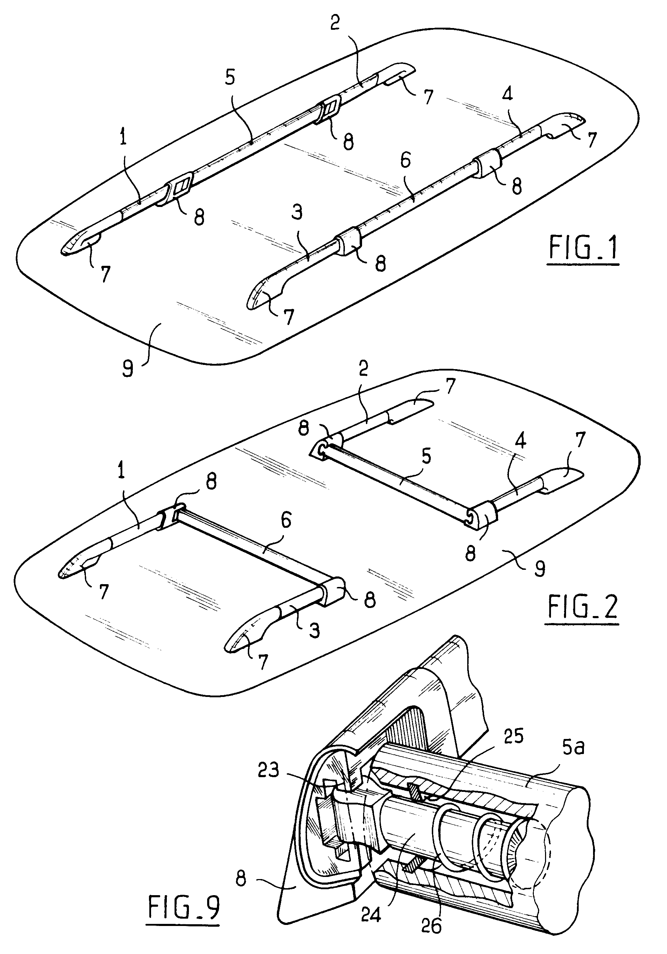

Une galerie de toit selon l'invention comporte comme représenté aux figures 1 et 2 quatre tronçons de barres d'extrémité 1,2,3,4, fixes et deux barres centrales mobiles 5 et 6. Chaque partie fixe 1,2,3,4 comporte un pied d'extrémité 7 et un pied supplémentaire 8 par lesquels elle est attelée au pavillon 9 du véhicule automobile.

A la figure 1 une barre 5 est disposée longitudinalement entre les parties d'extrémité 1 et 2 tandis que la barre 6 est disposée de la même manière entre les parties d'extrémité 3 et 4 pour former deux barres de toit longitudinales.

A la figure 2 en revanche, la barre 5 est placée entre les parties d'extrémité 2 et 4 tandis que la barre 6 est placée entre les parties d'extrémité 1 et 3 pour former deux barres transversales. Les moyens de liaison des barres 5 et 6 aux parties d'extrémité 1,2,3,4 dans les deux positions possibles pour chacune des parties sont situées sensiblement dans les pieds supplémentaires 8, de sorte que la charge est correctement reprise par le pavillon du véhicule. Dans le cas des figures 1 et 2, les barres 5 et 6 ont une longueur égale à la distance séparant les deux barres longitudinale de toit, ceci n'étant pas une condition essentielle pour l'invention si on prévoit des barres 5 et 6 télescopiques.

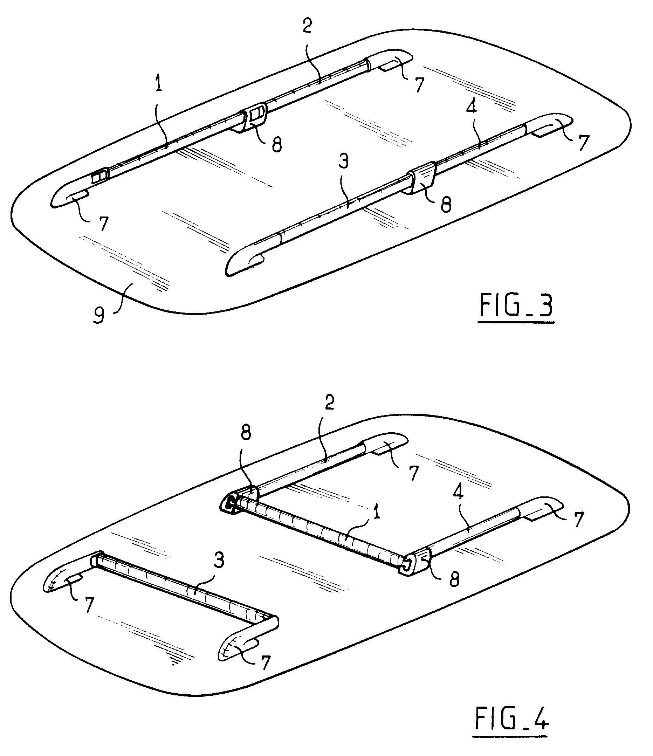

Aux figures 3 et 4, l'une des deux parties d'extrémité de chaque élément longitudinal est réduite à un pied 7. Les barres 1 et 3 sont alors connectables et déconnectables entre les pieds 7 et les pieds 8. Il faut noter que ce n'est pas sortir du cadre de la présente invention que de prévoir des parties 2 et 4 mobiles comme les parties 1 et 3 pour être également placées transversalement.

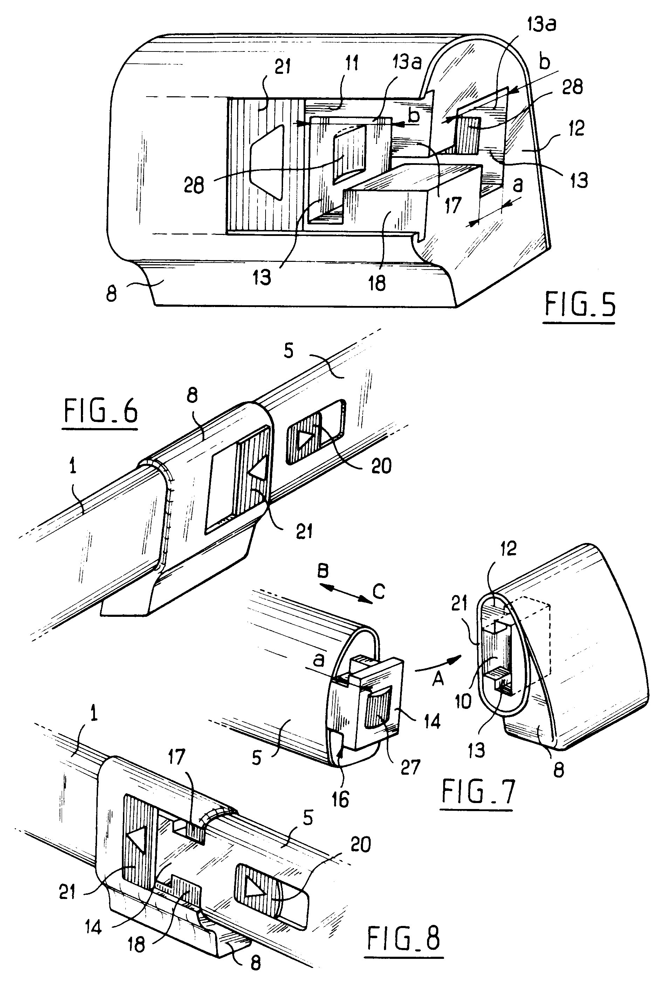

Un exemple de moyen de liaison entre les barres et les parties d'extrémité, que ces parties centrales soient disposées longitudinalement ou transversalement, est illustré aux figures 5 à 7.

A la figure 5, on a représenté un pied intermédiaire ou secondaire 8 qui comporte en bout une ouverture particulière 10 constituée en fait par deux ouvertures en T orthogonales, la barre du T étant verticale et sa jambe étant horizontale, l'une des extrémités de la barre du T étant d'épaisseur deux fois supérieure à l'autre extrémité. Ainsi, l'ouverture 10 dessine-t-elle sur deux faces orthogonales 11 et 12 du pied 8 une même section 13. Il est donc possible d'introduire soit perpendiculairement à la face 11, soit perpendiculairement à la face 12 dans l'ouverture 10 une pièce de liaison telle que celle représenté en 14 à la figure 7, solidaire de l'extrémité d'une barre mobile telle que 5. La pièce 14 possède une section générale dans un plan parallèle à la direction longitudinale de la barre 5 sensiblement de la même forme que la section 13 dessinée par l'ouverture 10 sur les faces 11 et 12 du pied 8. La seule différence réside dans le fait que cette section qui a la forme générale d'un T, est moins large dans sa partie supérieure que la partie correspondante supérieure 13a qui doit la recevoir de l'ouverture 10. En d'autre termes, la dimension a sur la figure 7 est sensiblement deux fois plus petite que la dimension b sur la figure 5.

Les rainures 15 et 16 que définit la pièce 14 sous les ailes du T permettent le passage des parties en saillie 17 et 18 de l'ouverture 10 lorsque la pièce 14 est introduite dans cette ouverture 10 perpendiculairement à l'une de ses faces 11 ou 12 comme le montre la flèche A de la figure 7. Le passage de la partie 17 n'est cependant possible que si l'on retire de la rainure 15 un élément de verrouillage 19 qui est rétractable dans le sens B noté à la figure 7 à l'encontre d'un organe de rappel non représenté dont l'effet est orienté à l'opposé du sens B dans le sens C comme indiqué également à la figure 7. La manoeuvre de ce verrou 19 est réalisée au moyen d'un poussoir manuel 20 accessible par exemple sur le côté de chaque barre 5 et 6 à l'extrémité de celle-ci.

On comprend, au vu de la figure 7, qu'il est possible d'introduire la pièce 14 à l'intérieur de l'ouverture 10 dans un mouvement perpendiculaire à la face 12 du pied 8 dans la mesure où l'on escamote dans le sens B le verrou 19. La pièce étant complètement logée dans l'ouverture 10, on relâche le verrou 19 qui peut se loger derrière la partie en saillie 17 de l'ouverture 10, interdisant ainsi un mouvement de la pièce 14 dans le sens contraire à celui noté A sur la figure 7. Cette introduction de la pièce 14 dans l'ouverture 10 provoque en même temps le repoussage d'un volet 21 qui est rappelé par un organe élastique non représenté dans une position d'obturation du débouché de l'ouverture 10 sur la face 11 du pied 8.

Chacune des extrémités des barres 5 et 6 étant logée conformément à la figure 7 dans chacune des ouvertures 10 des pieds 8, et verrouillée dans cette position, on a constitué grâce à l'invention une galerie de toit avec deux barres transversales comme représenté à la figure 2. Pour replacer les parties 5 et 6 en alignement avec les parties 1 et 2 d'une part et 3 et 4 d'autre part, on procède comme indiqué à la figure 8, c'est-à-dire en introduisant la pièce 14 que chaque barre 5 et 6 possède à chacune de ses extrémités, dans l'ouverture 10 de chacun des pieds perpendiculairement à sa face extérieure 11. Pour ce faire, on aura repoussé le volet d'obturation 21 pour dégager le débouché 13 de l'ouverture 10 sur la face 11 et après avoir escamoté le verrou 19 pour passer la partie en saillie 17. Lorsque la pièce 14 est logée dans l'ouverture 10, le volet 21 peut revenir dans sa position d'obturation comme le montre la figure 6 pour masquer ainsi la liaison.

Dans une variante de réalisation de l'invention, les barres 5 et 6 peuvent être articulées par l'une de leurs extrémités à l'une des parties fixes 1 et 2 pour la barre 5 ou 3 et 4 pour la barre 6. Un exemple d'articulation est illustré par la figure 9, par exemple entre la barre 5 et la barre 2. La barre 2 porte dans un logement recouvert par un volet du genre du volet 21 des figures précédentes, un axe d'articulation 23 dirigé sensiblement vers le pavillon du véhicule pour une tige 24 le long de laquelle la partie principale 5a de l'élément 5 de galerie est monté à coulissement. Une butée annulaire 25 solidaire de l'élément A forme une surface d'appui pour un ressort 26 qui s'appuie également sur un épaulement d'extrémité de la tige 24. L'action du ressort 26 tend donc à raccourcir la longueur totale de la barre 5 formée par la partie 5a et par la tige 24. Bien entendu la barre 6 peut être articulée de la même manière à la partie fixe 3.

Pour permettre la rotation simultanée des barres 5 et 6, on aura prévu que l'articulation 23 possède un certain degré de liberté par rapport à sa direction générale perpendiculaire au pavillon 9 du véhicule autorisant un léger débattement des barres 5 et 6 afin que leurs extrémités libres puisse se croiser. Les moyens mis en oeuvre pour obtenir cette fonction peuvent être obtenus par le choix d'un matériau adéquat élastique formant soit l'articulation elle-même de la pièce 24 sur l'axe 23 soit le support de l'axe 23 à l'intérieur du pied 8.

A l'autre extrémité les barres 5 et 6 possèdent une pièce 14 comme précédemment décrite qui viendra coopérer avec une ouverture 10 ménagée dans le pied 8 correspondant qui ne possède pas l'axe d'articulation.

Pour procéder à l'emboîtement de cette pièce 14 dans le logement 10 que porte soit le pied 8 transversalement adjacent au pied 8 qui porte l'articulation 23 soit le pied 8 longitudinalement adjacent à ce même pied 8, il est prévu de tirer légèrement sur la partie 5a des traverses 5 et 6 dont la longueur au repos est légèrement inférieure à la distance séparant les pieds 8. Ceci permet de placer les éléments mobiles 5 et 6 en tension entre les éléments fixes 1,2,3 et 4, cette tension jouant le rôle de rattrapage de jeu et supprimant ainsi tout risque de bruit dû aux vibrations du véhicule.

Cette disposition télescopique ou de longueur ajustable des éléments 5 et 6 de la galerie 3 selon l'invention peut être multipliée au long de ces éléments afin d'obtenir une plus grande amplitude dans les variations de longueurs possibles de ces barres.

On notera enfin à titre secondaire la présence à l'extrémité longitudinale de la pièce 14 d'un cliquet élastique 27 qui peut coopérer avec un logement 28 ménagé dans les parois internes de l'ouverture d'emboîtement 10. Ce cliquet constitue une petite sécurité du maintien de l'emboîtement au cas où le verrou 19 ne fonctionnerait pas et un index de bon positionnement de la barre par rapport au pied.

## Revendications

1. Dispositif de galerie de toit pour pavillon (9) de véhicule automobile comportant au moins deux éléments longitudinaux attelés au pavillon (9) du véhicule par deux pieds d'extrémité (7), chaque élément longitudinal comportant un pied supplémentaire (8) entre les deux pieds d'extrémité (7), caractérisé en ce que, entre ce pied supplémentaire et chaque pied d'extrémité chaque élément longitudinal est constitué par des barres séparées (1, 2, 3, 4, 5, 6), au moins une barre (1,3,5,6) de chaque élément longitudinal étant reliée aux pieds d'extrémité (7) et supplémentaire (8) par des moyens de liaison connectables et déconnectables permettant la mise en place de cette barre soit entre deux pieds (7,8) d'un même élément longitudinal soit entre deux pieds (7,7 ; 8,8) de deux éléments longitudinaux distincts situés dans une même position longitudinale sur le pavillon (9) du véhicule.

2. Dispositif de galerie de toit pour pavillon (9) de véhicule automobile comportant au moins deux éléments longitudinaux attelis au pavillon (9) du véhicule par deux pieds d'extrémité chaque élément comportant deux pieds supplémentaires (8) définissant une barre centrale (5,6) et deux parties (1,2,3,4) d'extrémité fixes, caractérisé en ce que la barre centrale (5,6) est reliée aux parties d'extrémité (1,2,3,4) par des moyens de liaison connectables et déconnectables permettant la mise en place de cette barre centrale (5,6) soit entre deux parties d'extrémité (1,2,3,4) d'un même élément longitudinal, soit entre deux parties d'extrémité (1,3 ; 2,4) de deux éléments longitudinaux distincts situées dans une même position longitudinale sur le pavillon (9) du véhicule.

3. Dispositif selon la revendication 1 ou la revendication 2, caractérisé en ce que les moyens de liaison comportent des organes (10,14) d'emboîtement prévus en correspondance aux extrémités de la barre (1,2,5,6) et dans les pieds (7,8), associés à des organes de verrouillage (17, 19) des emboîtements réalisés dans les deux positions de la barre (1,2,5,6).

4. Dispositif selon la revendication 1 ou la revendication 2, caractérisé en ce que les moyens de liaison comportent au moins une articulation (23) entre une extrémité de la barre (5,6) et l'un (8) des deux pieds (7,8) d'axe sensiblement perpendiculaire au pavillon (9) du véhicule et des moyens d'emboîtement (10,14) portés par l'autre extrémité de la barre (1,2,5,6) et les pieds (7,8) susceptibles de coopérer avec la barre (1,2,5,6) dans chacune de ses positions.

5. Dispositif selon l'une des revendications précédentes, caractérisé en ce que la barre (1,2,5,6) est télescopique.

6. Dispositif selon la revendication 4, caractérisé en ce que l'articulation (23) possède un degré de liberté perpendiculaire à son axe, en étant porté par le pied correspondant au moyen d'un palier élastiquement déformable.

7. Dispositif selon l'une des revendications précédentes, caractérisé en ce que les moyens d'emboîtement comportent un organe de verrouillage (19) à actionnement manuel normalement maintenu dans sa position de verrouillage.

8. Dispositif selon l'une quelconque des revendications 4 à 7, caractérisé en ce que l'extrémité de la barre (5,6) portant l'articulation (23) est en forme de tige de guidage (24) sur laquelle est montée à coulissement la partie principale (5a) de cette barre, un organe de rappel (26) attelé entre elles ayant pour effet de rendre minimale la longueur de l'ensemble tige (24) - partie principale (5a).

## Claims

1. A roof-rack device for a motor vehicle roof (9) the device including at least two longitudinal elements coupled to the roof (9) of the vehicle by respective pairs of end legs (7), each longitudinal element including one additional leg (8) between the two end legs (7), characterized in that between said additional leg and each end leg, each longitudinal element is constituted by separated bars (1, 2, 3, 4, 5, 6), at least one bar (1, 3, 5, 6) of each longitudinal element being connected to the end leg (7) and the additional leg (8) via releasable link means enabling said bar to be installed either between two legs (7, 8) of the same longitudinal element, or else between two legs (7, 7; 8, 8) of two different longitudinal elements situated at the same longitudinal position along the roof (9) of the vehicle.

2. A device according to claim 1, characterized in that each element includes two additional legs (8) defining a central bar (5, 6) and two fixed end portions (1, 2, 3, 4), the central bar being connected to the end portions (1, 2, 3, 4) via link means that are connectable and disconnectable enabling said central bar (5, 6) to be installed either between two end portions (1, 2, 3, 4) in a single longitudinal element, or else between two end portions (1, 3; 2, 4) of two distinct longitudinal elements situated at the same longitudinal position along the roof (9) of the vehicle.

3. A device according to claim 1 or claim 2, characterized in that the link means include corresponding engagement members (10, 14) provided at the ends of the bars (1, 2, 5, 6) and in the legs (7, 8), and associated with locking members (17, 19) for locking the engagements achieved in both positions of each bar (1, 2, 5, 6).

4. A device according to claim 1 or claim 2, characterized in that the link means include at least one hinge (23) between one end of the bar (5, 6) and one (8) of the two legs (7, 8) about an axis substantially perpendicular to the roof (9) of the vehicle, and engagement means (10, 14) carried by the other end of the bar (1, 2, 5, 6) and by the legs (7, 8) and suitable for co-operating with the bar (1, 2, 5, 6) in each of its positions.

5. A device according to any preceding claim, characterized in that the bar (1, 2, 5, 6) is telescopic.

6. A device according to claim 4, characterized in that the hinge axis (23) has a certain amount of freedom perpendicular to its direction, being carried by the corresponding leg by means of an elastically deformable bearing.

7. A device according to any preceding claim, characterized in that the engagement means include a manually-actuated locking member (19) that is normally held in its locking position.

8. A device according to any one of claims 4 to 7, characterized in that the end of the bar (5, 6) carrying the hinge (23) is in the form of a guide rod (24) having the main portion (5a) of said bar slidably mounted thereon, a return member (26) being coupled between them for the purpose of minimizing the length of the assembly constituted by the rod (24) and said main portion (5a).

## Patentansprüche

1. Dachgepäckträgeranordnung für ein Kraftfahrzeugdach (9) umfassend mindestens zwei Längselemente, die mit dem Fahrzeugdach (9) durch zwei Endfüße (7) verbunden sind und jeweils einen zusätzlichen Fuß (8) zwischen den beiden Endfüßen (7) haben, dadurch **gekennzeichnet**, daß zwischen diesem zusätzlichen Fuß und jedem Endfuß jedes Längselement aus getrennten Stangen (1, 2, 3, 4, 5, 6) besteht, wobei mindestens eine Stange (1, 3, 5, 6) jedes Längselementes mit den Endfüßen (7) und den zusätzlichen Füßen (8) durch koppelbare und entkoppelbare Verbindungsmittel verbunden ist, welche die Anordnung dieser Stange entweder zwischen zwei Füßen (7, 8) desselben Längselementes oder zwischen zwei Füßen (7, 7; 8, 8) von zwei unterschiedlichen Längselementen erlauben, die sich in der gleichen Längsposition auf dem Fahrzeugdach (9) befinden.

2. Dachgepäckträgeranordnung für ein Kraftfahrzeugdach (9) umfassend mindestens zwei Längselemente, die mit dem Fahrzeugdach (9) durch zwei Endfüße verbunden sind und jeweils zwei zusätzliche Füße (8) haben, die eine Mittelstange (5, 6) und zwei Abschnitte (1, 2, 3, 4) mit festen Enden definieren, dadurch **gekennzeichnet**, daß die Mittelstange (5, 6) mit den beiden Endabschnitten (1, 2, 3, 4) über koppelbare und entkoppelbare Verbindungsmittel verbunden ist, welche die Anordnung dieser Mittelstange (5, 6) entweder zwischen zwei Endabschnitten (1, 2, 3, 4) desselben Längselementes oder zwischen zwei in derselben Längsposition auf dem Fahrzeugdach (9) angeordneten Endabschnitten (1, 3; 2, 4) von zwei unterschiedlichen Längselementen erlauben.

3. Dachgepäckträgeranordnung nach Anspruch 1 oder 2, dadurch **gekennzeichnet**, daß die Verbindungsmittel Eingriffsorgane (10, 14) haben, die einander entsprechend an den Enden der Stange (1, 2, 5, 6) und in den Füßen (7, 8) vorgesehen sind und mit Verriegelungsorganen (17, 19) zur Verriegelung der Eingriffe verbunden sind, die in den beiden Positionen der Stange (1, 2, 5, 6) realisiert werden.

4. Vorrichtung nach Anspruch 1 oder 2, dadurch **gekennzeichnet**, daß die Verbindungsmittel mindestens ein Gelenk (23) zwischen einem Ende der Stange (5, 6) und einem (8) der beiden Füße (7, 8) mit im wesentlichen senkrecht zum Fahrzeugdach (9) gerichteter Achse und Eingriffsmittel (10, 14) haben, die von dem anderen Ende der Stange (1, 2, 5, 6) getragen sind, wobei die Füße (7, 8) mit der Stange (1, 2, 5, 6) in jeder ihrer Positionen zusammenwirken können.

5. Vorrichtung nach einem der vorhergehenden Ansprüche, dadurch **gekennzeichnet**, daß die Stange (1, 2, 5, 6) als Teleskopstange ausgebildet ist.

6. Vorrichtung nach Anspruch 4, dadurch **gekennzeichnet**, daß das Gelenk (23) einen Freiheitsgrad senkrecht zur seiner Achse besitzt und dabei von dem entsprechenden Fuß mittels eines elastisch verformbaren Lagers gehalten ist.

7. Vorrichtung nach einem der vorhergehenden Ansprüche, dadurch **gekennzeichnet**, daß die Eingriffsmittel ein manuell betätigbares Verriegelungsorgan (19) haben, das normalerweise in seiner Verriegelungsstellung gehalten ist.

8. Vorrichtung nach einem der vorhergehenden Ansprüche 4 bis 7, dadurch **gekennzeichnet**, daß das das Gelenk (23) tragende Ende der Stange (5, 6) die Form einer Führungsstange (24) hat, auf der ein Hauptabschnitt (5a) dieser Stange gleitend gelagert ist, wobei zwischen ihnen ein Rückstellorgan (26) angeordnet ist, daß die Wirkung hat, die Länge der Anordnung Führungsstange (24) - Hauptabschnitt (5a) minimal zu machen.
